# EUROPEAN PATENT APPLICATION

(11) **EP 1 815 928 A1**
(43) Date of publication of application: **08.08.2007**
(21) Application number: 05809653.8
(22) Date of filing: 25.11.2005
(51) Int. Cl.: B23D 23/00

(54) **CUTTING DEVICE AND CUTTING METHOD**

(30) Priority: 26.11.2004 JP 2004341622
(71) Applicant: Bridgestone Corporation, Tokyo 104-8340 (JP)
(72) Inventor: TAKASUGA, Yutaka, c/o BRIDGESTONE CORPORATION, Kodaira-shi, Tokyo 1878531 (JP)
(74) Representative: Whalley, Kevin
(86) International application number: PCT/JP2005/021665
(87) International publication number: WO 2006/057330

(57) **Abstract**

A longer life and maintenance-free of a cutter for cutting a linear member are realized.

A fixed blade (1) and a rotating blade (2) have through holes at the center of a disk, respectively, and shearing blades are formed on circumferential surfaces (1a) and (2a) of the respective through holes. The fixed blade (1) and the rotating blade (2) are held rotatably around the center axes of the through holes (free rotating direction) by a fixed blade holding member and a rotating blade holding member, not shown, respectively. A linear member (C) to be cut is inserted through the through holes of the fixed blade (1) and the rotating blade (2) and the center axis of the rotating blade (2) is displaced so that a centroid (6) of the rotating blade (2) becomes an oval so as to cut the linear member (C).

## Description

### Technical field

The present invention relates to a device and a method for cutting a linear member and particularly to a cutting device and a cutting method of a linear member which realize a longer life and maintenance-free property of a cutting blade.

### Background Art

As a process for producing a belt, which is a constituent member of a pneumatic tire, a process of helically winding a steel cord coated by rubber around a cylindrical shaft body while partially overlapping and cutting the rubber-coated cord when winding for the length of a single tire is completed is known (See Patent Document 1). Also, as a process of producing a cap-ply, which is a constituent member of a pneumatic tire, a process is known that a cap-ply ribbon made of a rubber-coated cord helically wound on a belt and the cap-ply ribbon is cut when winding for the length of a single tire is completed (See Patent Documents 2, 3). In these processes, a scissors-type cutter or a guillotine-type cutter is used as a cutting device for cutting a rubber-coated cord.
Patent Document 1: Japanese Patent Application Laid-Open No. 2001-252992
Patent Document 2: Japanese Patent Application Laid-Open No. 5-69498
Patent Document 3: Japanese Patent Application Laid-Open No. 7-164559

### Disclosure of the Invention

In the case of the scissors-type cutter or the guillotine-type cutter, however, since cutting is performed at the same portion of a blade, there is a problem that the blade is deteriorated quickly and the life of the cutter is short. Therefore, running rate of equipment is lowered by time required for replacement and maintenance works for the cutter, which has become a disincentive in productivity improvement.

The present invention was made in view of the above problem and has an object to realize a longer life and maintenance-free property of a cutter for cutting a linear member.

An invention according to claim 1 is a cutting device, comprising a pair of cutting blades on which a shearing blade is formed on the circumferential surface of a through hole respectively, a pair of holding means for holding the pair of cutting blades respectively, and a displacement means capable of displacement of the holding means so that the holding means are displaced relatively in a loop from a state where the center axes of the through holes of the pair of cutting blades are opposed to each other.

An invention according to claim 2 is the cutting device described in claim 1, wherein one of the pair of cutting blades is a fixed blade in which the center axis position of the through hole is fixed, while the other is a movable blade in which the center axis position of the through hole is capable of displacement.

An invention according to claim 3 is the cutting device described in claim 2, wherein the displacement means is provided with means for having the holding means of the movable blade move with respect to a predetermined fulcrum so that the center axis of the through hole of the movable blade is displaced in the loop state.

An invention according to claim 4 is the cutting device described in claim 1, wherein the opposed surfaces of the pair of cutting blades are a flat surface and a truncated conical surface, both are flat surfaces or both are truncated conical surfaces.

An invention according to claim 5 is the cutting device described in claim 1, wherein the pair of cutting blades have through holes at the center of a disk and are held rotatably around the center axis of the through hole.

An invention according to claim 6 is a cutting method comprising the processes of: holding the two cutting blades so that the center axes of the through holes of the pair of cutting blades on which a shearing blade is formed on the circumferential surface of the through hole respectively, are opposed to each other; inserting a member to be cut through the through holes of the pair of cutting blades; and relatively displacing the center axes of the through holes of the pair of cutting blades in a loop from their aligned position.

### (Function of the Invention)

According to the invention in claims 1, 4 and 6, since the center axes of the through holes of the pair of cutting blades are relatively displaced in a loop (so as to draw a loop trajectory) and the member inserted through the through hole is cut by the shearing blade on the circumferential surface of the through hole, different portions of the shearing blade are used for cutting according to the position of the loop.

According to the invention in claims 2 and 3, since the member inserted through the through hole is cut by the shearing blade on the circumferential surface of the through hole by displacing the center axis of the through hole of the movable blade with respect to the center axis of the through hole of the fixed blade, different portions of the shearing blade are used for cutting according to the position of the loop.

According to the invention in claim 5, since the cutting blade rotates, the portion used for cutting in the shearing blade formed at the circumferential surface of the through hole of the cutting blade varies.

According to the present invention, since the portion used for cutting of the shearing blade is varied and not concentrated at one location, a longer life and maintenance-free property of the cutting device can be realized.

### Brief Description of the Drawings

Fig. 1 is a sectional view of a cutting device according to an embodiment of the present invention;
Fig. 2 is a front view of the cutting device according to the embodiment of the present invention;
Fig. 3 is an enlarged sectional view and a front view of cutting blades in the embodiment of the present invention; and
Fig. 4 is a diagram showing trajectories of the center axes of the cutting blades in the embodiment of the present invention.

### Description of the Reference Symbols

- 1:: Fixed blade
- 1a, 2a:: Shearing blade
- 2:: Rotating blade
- 3:: Fixed blade holding member
- 4:: Rotating blade holding member
- 4a:: Fulcrum shaft
- 4c:: Rotating bearing
- 5:: Motor
- 5a:: Motor shaft
- 5b:: Eccentric shaft

### Best Modes for Carrying Out the Invention

An embodiment of the present invention will be described below in detail referring to the attached drawings.

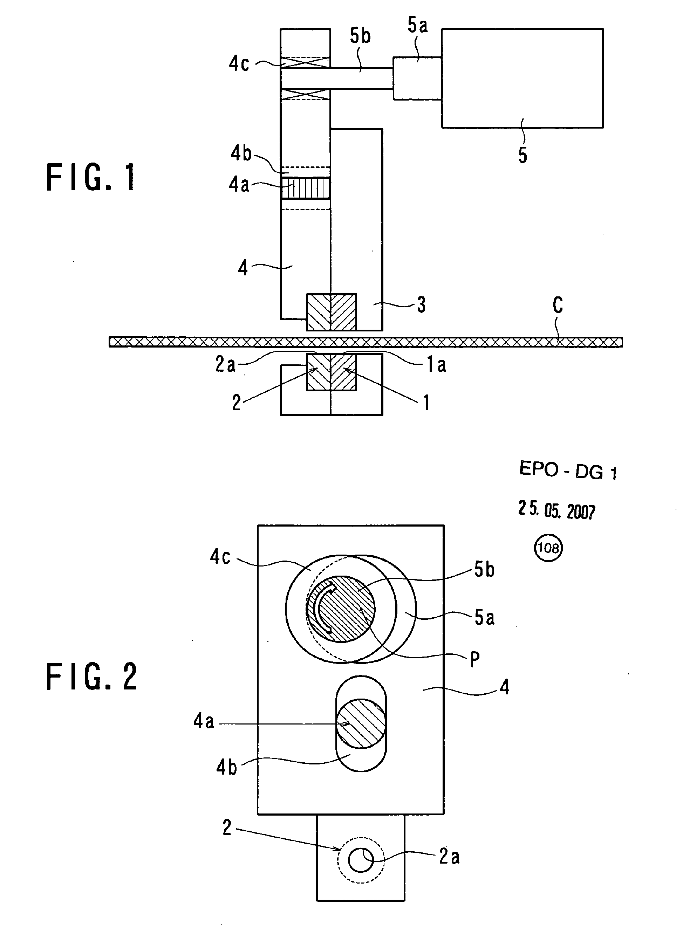

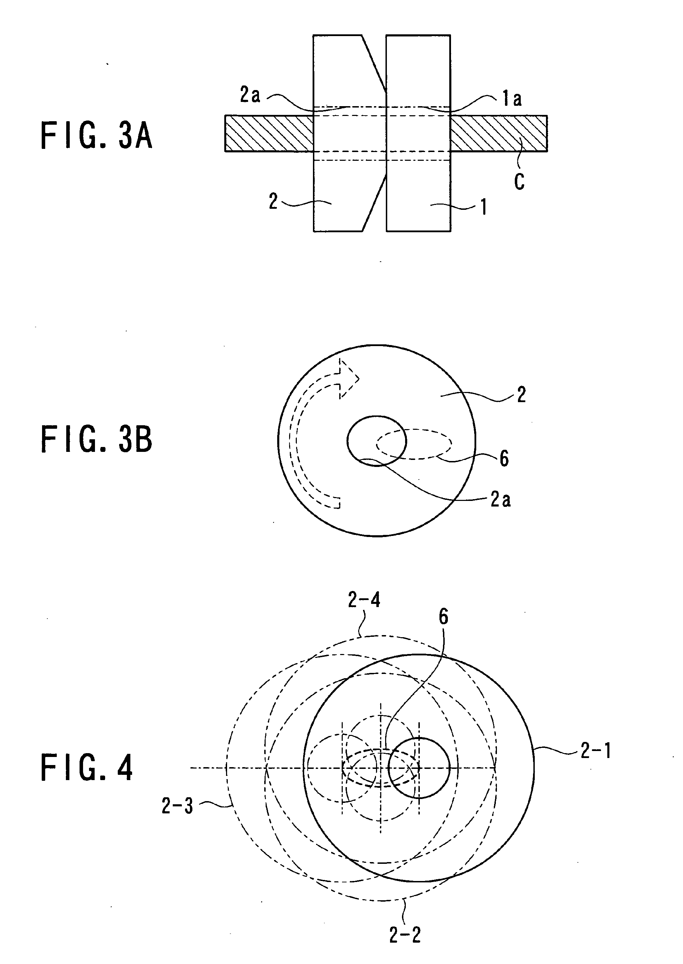

Figs. 1 and 2 are a sectional view and a front view of a cutting device according to the embodiment of the present invention, respectively. Fig. 3 is an enlarged sectional view and a front view of cutting blades in the cutting device and Fig. 4 is a diagram showing trajectories of the center axes of the cutting blades.

As shown in Figs. 1 and 2, the cutting device according to the present embodiment includes a fixed blade 1 having a through hole at the center of a disk and a shearing blade formed on a circumferential surface 1a of the through hole, a rotating blade 2 having a through hole at the center of a disk and a shearing blade formed on a circumferential surface 2a of the through hole, a plate-shaped fixed blade holding member 3 rotatably holding the fixed blade 1 around the center axis of the through hole, and a plate-shaped rotating blade holding member 4 rotatably holding the rotating blade 2 around the center axis of the through hole. The rotating blade 1 and the fixed blade 2 are attached to holding members 3 and 4 so that they can be freely rotated around the center axes of the respective through holes (free rotating direction). Also, the outer diameters and the inner diameters (diameter of the through hole) of the fixed blade 1 and the rotating blade 2 are in the same size, and the center axes of the through holes are also aligned in the state where a linear member C is passed through.

The fixed blade holding member 3 and the rotating blade holding member 4 are brought into contact with each other on their surfaces and fixed to members, not shown, so that the through holes of the fixed blade 1 and the rotating blade 2 held by respective holding members are opposed to each other. A through hole 4b having a vertically long opening is formed at the rotating blade holding member 4, and a fulcrum shaft 4a provided on the surface of the fixed blade holding member 3 is arranged inside thereof. Moreover, a rotating bearing 4c is installed above the through hole 4b, and an eccentric shaft 5b directly connected to a motor shaft 5a of a motor 5 is rotatably placed inside thereof .

As shown in Fig. 3A, the fixed blade 1 is formed to be flat on both surfaces, while the rotating blade 2 is formed with one surface flat and the other surface in a truncated cone shape. The truncated cone shaped surface of the rotating blade 2 is opposed to and brought into contact with the flat surface of the fixed blade 1. The truncated cone shaped surface permits pressure to concentrate onto the blade surface of the sharing blade.

The eccentric shaft 5b directly connected to the motor shaft 5a of the motor 5 has its rotating center eccentric from a center P of the motor shaft 5a, and as shown by an arrow in white in Fig. 2, the eccentric shaft 5b is rotated clockwise in contact with the inner surface of the rotating bearing 4c of the eccentric shaft 5b. Therefore, by being pressed by the eccentric shaft 5b via the rotating bearing 4c, the rotating blade holding member 4 performs a vertical reciprocating motion and a horizontal oscillating motion with the fulcrum shaft 4a as a fulcrum. As a result, when the eccentric shaft 5b makes one revolution, the center of the rotating blade 2, that is, a centroid 6 of the through hole of the rotating blade 2 becomes an oval having the long axis in the horizontal direction as shown in Fig. 3B.

A method of cutting a linear member by the cutting device having the above configuration will be described. First, as shown in Figs. 1, 3A and 4, while the rotating blade 2 is aligned with the position of a circle 2-1 in Fig. 4 with respect to the fixed blade 1 fixed to the position of the circle 2-1 in Fig. 4 all the time, a linear member C to be cut is inserted through the through holes at the center of the fixed blade 1 and the rotating blade 2 of the cutting device. When the motor shaft 5a is rotated from this state, the outer peripheral surface of the eccentric shaft 5b makes a rotational motion in contact with the inner surface of the rotating bearing 4c. At this time, by being pressed by the eccentric shaft 5b via the rotating bearing 4c, the rotating blade holding member 4 performs a vertical reciprocating motion and a horizontal oscillating motion with the fulcrum shaft 4a as a fulcrum. Therefore, when the eccentric shaft 5b makes one revolution, the rotating blade 2 performs a rotating motion constituting a cycle of 2-1, 2-2, 2-3, and 2-4 in Fig. 4, and the centroid 6 becomes an oval. Since the fixed blade 1 is fixed at the position of the circle 2-1 all the time, the linear member C is cut by the fixed blade 1 and the rotating blade 2. By repeating the rotation and stop of the motor shaft 5a, the linear member C can be repeatedly cut at a high speed.

Since the cutting device according to the embodiment is configured so that the center axis of the rotating blade 2 draws an oval loop with respect to the center axis of the fixed blade 1 as above, the portion used for cutting does not concentrate at one spot as in the case where the cutting is carried out by reciprocating the center axis of the rotating blade 2 straight. Also, since the rotating blade 2 and the fixed blade 1 are rotatably mounted to the fixed blade holding member 3 and the rotating blade holding member 4 respectively, and rotate as appropriate around the center axis as shown by a broken-line arrow in Fig. 3B when cutting the linear member C, the spot to be used for cutting is changed all the time, and the portion used for cutting is further distributed.

In the above embodiment, the rotating blade holding member 4 is driven by the eccentric shaft 5b directly connected to the motor shaft 5a, but it may be driven by a pneumatic actuator. Moreover, the centroid of the rotating blade 2 may be a shape other than an oval as long as a closed loop is formed. Also, the opposing surfaces of both the fixed blade 1 and the rotating blade 2 may be flat surfaces or truncated conical surfaces. Moreover, the size of the outer diameters of the fixed blade 1 and the rotating blade 2 may be different with each other and the inner diameters of the fixed blade 1 and the rotating blade 2 may be different as well. Also, the positions of the center axes of both the two blades may be individually capable of displacement. Moreover, the fixed blade holding member 3 and the rotating blade holding member 4 are in contact in Fig. 1, but the fixed blade holding member 3 and the rotating blade holding member 4 do not have to be in contact as long as the fixed blade 1 and the rotating blade 2 are opposed to each other in contact.

## Claims

1. A cutting device, comprising:
a pair of cutting blades on which a shearing blade is formed on the circumferential surface of a through hole, respectively;
a pair of holding means for holding the pair of cutting blades, respectively; and
a displacement means capable of displacement of the holding means so that the holding means are displaced relatively in a loop from a state where the center axes of the through holes of the pair of cutting blades are opposed to each other.

2. The cutting device according to claim 1, wherein one of the pair of cutting blades is a fixed blade in which the center axis position of the through hole is fixed, while the other is a movable blade in which the center axis position of the through hole is capable of displacement.

3. The cutting device according to claim 2, wherein the displacement means is provided with means for making the holding means of the movable blade move with respect to a predetermined fulcrum so that the center axis of the through hole of the movable blade is displaced in a loop.

4. The cutting device according to claim 1, wherein the opposed surfaces of the pair of cutting blades are a flat surface and a truncated conical surface, both are flat surfaces or both are truncated conical surfaces.

5. The cutting device according to claim 1, wherein each of the pair of cutting blades has a through hole at the center of a disk and is held rotatably around the center axis of the through hole.

6. A cutting method comprising the processes of: holding two cutting blades so that the center axes of through holes of the pair of cutting blades on which a shearing blade is formed on the circumferential surface of the through hole respectively are opposed to each other; inserting a member to be cut through the through holes of the pair of cutting blades; and relatively displacing the center axes of the through holes of the pair of cutting blades in a loop from their aligned position.
